# EUROPEAN PATENT APPLICATION

(11) **EP 4 769 436 A1**
(43) Date of publication of application: **01.07.2026**
(21) Application number: 25227206.7
(22) Date of filing: 24.12.2025
(51) Int. Cl.: G21C 5/06, G21C 19/19, G21C 1/03, G21C 1/14

(54) **NUCLEAR REACTOR WITH AXIAL PLAY RECOVERY**

(30) Priority: 24.12.2024 IT 202400029994
(71) Applicant: ANSALDO ENERGIA S.p.A., 16152 Genova (IT)
(72) Inventor: MANTERO, Marco, 16152 Genova (IT); FRIGNANI, Michele, 16152 Genova (IT)
(74) Representative: Studio Torta S.p.A.

(57) **Abstract**

A nuclear reactor includes a vessel (2) internally defining a pool (3), a cooling fluid (CF) in the pool (3), and a core (6) housed in the vessel (2) and comprising a plurality of fuel elements (8) at least partially immersed in the cooling fluid (CF) and extending along respective longitudinal axes (A). For each fuel element (8), the nuclear reactor is provided with respective reversible locking members (17), configured to axially constrain adjacent fuel elements (8) to one another and to axially constrain the outermost fuel elements directly or indirectly to the vessel (2), so as to prevent the extraction of the constrained fuel elements (8). The nuclear reactor is further provided with axial adjustment devices (30, 40) configured to adjust an axial distance between respective fuel elements (8) and the respective locking members (17).

## Description

### Cross-reference to related applications

This patent application claims priority from Italian patent application no. 102024000029994 filed on December 24, 2024, the entire disclosure of which is incorporated herein by reference.

### Technical field

The present invention relates to a nuclear reactor with a modular grid.

### Background

As is known, in nuclear reactors it is important to maintain the correct positioning of the fuel elements forming the core to ensure desired performance and safety levels. A measure often adopted involves the use of a grid anchored to the casing or vessel of the nuclear reactor to restrain the upper ends of the fuel elements, preventing relative movements, both axial and radial. The role of the grid is particularly important in nuclear reactors that use heavy liquid metals, for example liquid lead, to cool the core. In this case, in fact, the cooling fluid, in addition to causing fluid-induced vibrations and a drag force in the direction of the velocity, also provides a strong buoyancy force to the fuel elements, which tend to rise. In nuclear reactors of this type, the grid therefore has the task of counteracting the buoyancy force caused by the cooling fluid.

Regardless of the cooling fluid used, the stabilization of the fuel elements by known grids, however, suffers from significant limitations and may cause problems in certain circumstances. In particular, for maintenance requirements, it is necessary to intervene on the fuel elements periodically and in a predetermined order, for example to redistribute or replace the partially or fully spent fuel elements. For this purpose, the fuel elements must be extracted from the core. To allow the extraction of the fuel elements, the grid must however be removed, but the removal of the grid reduces the stability of the fuel elements, which may be subject to displacements. For example, when one of the fuel elements is extracted, the remaining fuel elements normally tend to take up the radial plays. In such conditions, a so-called local "flowering" condition may occur, which could lead to the accidental withdrawal of one or more fuel elements and which persists until the grid is repositioned in place.

The temporary removal of the grid is even more critical in reactors cooled with heavy liquid metals, since the fuel elements are also subject to the buoyancy force of the cooling fluid and therefore the risk of accidental extraction is even greater than for local "flowering" alone.

Whatever the cooling fluid used, the fuel elements must therefore be held in position otherwise, fully or partially immersed in the cooling fluid. The operation, which is generally performed using dedicated machinery, is however complex and not without risks.

According to other known solutions, the fuel elements of the core are reversibly constrained to one another, so as to prevent relative axial sliding. More precisely, the heads of the fuel elements are provided with axial locking members movable between a locking position and a retracted position. In the locking position, the locking members prevent relative axial sliding between the respective fuel element and an adjacent fuel element. In the retracted position, instead, the locking members retract within the axial footprint of the head of the respective fuel element, removing the constraint to the relative sliding between the two adjacent fuel elements. The outer fuel elements can be anchored with the same system to the vessel of the nuclear reactor, keeping the core in a stable position.

This solution advantageously allows each fuel element to be individually extracted by operating the respective locking members and the locking members of the adjacent fuel elements. The problem of maintaining the positioning of the fuel elements during maintenance and replacement operations is thus overcome in particular, and the grid is not necessary.

However, the core of a nuclear reactor can contain several tens of fuel elements. While the outer fuel elements remain substantially anchored to the vessel in the correct working position, generally through anchoring structures, the progressively more internal fuel elements are nevertheless subject to a certain axial displacement due to the inevitable plays that are associated with the locking members and that accumulate from the periphery towards the centre of the core. The result is that the internal fuel elements are not maintained in an optimal working position, to the detriment of the reactor's efficiency. The effect is particularly evident when the cooling fluid comprises heavy liquid metals and provides a significant buoyancy force. However, even the drag alone due to the circulation of the cooling fluid, regardless of its nature, could under certain conditions be sufficient to cause the axial displacement of the internal fuel elements.

US 2019/189296 A1 a nuclear reactor comprising a vessel, internally defining a pool, a cooling fluid in the pool and a core housed in the vessel and comprising a plurality of fuel elements at least partially immersed in the cooling fluid, wherein each fuel element extends along a respective longitudinal axis. Each fuel element is provided with respective reversible locking members, configured to axially constrain adjacent fuel elements to one another and to axially constrain the outermost fuel elements to the vessel, so as to prevent the extraction of the constrained fuel elements.

Other examples of known nuclear reactors are disclosed in US 2022/076853 A1.

### Summary

It is therefore an object of the present invention to provide a nuclear reactor that allows to overcome or at least mitigate the described limitations.

According to an aspect of the present invention, there is provided a nuclear reactor comprising:
a vessel internally defining a pool;
a cooling fluid in the pool;
a core housed in the vessel and comprising a plurality of fuel elements at least partially immersed in the cooling fluid, wherein each fuel element extends along a respective longitudinal axis; and
for each fuel element, respective reversible locking members, configured to axially constrain adjacent fuel elements to one another and to axially constrain the outermost fuel elements to the vessel, so as to prevent the extraction of the constrained fuel elements;
characterized by axial adjustment devices configured to adjust an axial distance between respective fuel elements and the respective locking members.

The invention advantageously makes it possible to selectively remove the fuel elements and, at the same time, to maintain the correct alignment in the core in use. The use of reversible axial constraints between adjacent fuel elements in fact allows each of the fuel elements forming the core of the nuclear reactor to be selectively and individually released and extracted. During extraction and until each extracted fuel element is reintroduced or replaced, the other fuel elements remain mutually constrained in position without the need to apply auxiliary forces using an external machine. The axial adjustment devices, on the other hand, allow to take up the axial plays that are inevitably present in the constraints between adjacent fuel elements and to return all the fuel elements to the desired elevation, so as to preserve efficiency. The invention thus combines the advantages of systems that allow the individual extraction of the fuel elements and of systems that ensure correct positioning in use, without, however, inheriting their disadvantages. In particular, the reactor according to the invention does not require the use of a rigid monolithic grid, but achieves the same effect with regard to the positioning of the fuel elements.

According to an aspect of the invention, the locking members are movable between respective locking positions, in which the locking members axially constrain respective adjacent fuel elements, and respective retracted positions, in which the locking members are retracted within an axial footprint of the respective fuel elements.

In this way, the fuel elements can be alternatively locked in place or released for extraction simply by operating the respective locking members and those of the adjacent fuel elements.

According to an aspect of the invention, the nuclear reactor comprises supports for the locking members.

According to an aspect of the invention, the axial adjustment devices comprise local axial adjustment devices, configured to adjust axial distances of the respective locking members from the respective supports independently of one another.

The independent adjustment of the individual locking members allows not only a fine take-up of the plays, but also to avoid torsional stresses on the locking members. The effects of the plays, in fact, normally accumulate from the periphery of the core, where the outermost fuel elements are constrained to the vessel, for example through an anchoring structure, towards the centre. Consequently, the central fuel elements are displaced in the axial direction to a greater extent than the peripheral elements and imbalances and torques can arise on the constraints between adjacent fuel elements, that is, in this case, on the locking members and their supports. The stresses on each fuel element may instead be balanced thanks to the independent adjustment.

According to an aspect of the invention, the axial adjustment devices local comprise, for each locking member, a threaded pin on the respective support, a threaded bush coupled to the threaded pin and an actuator configured to rotate the threaded bush with respect to the threaded pin; and wherein the locking members are idly fitted on the respective threaded bushes.

The local axial adjustment devices thus realised are simple, reliable and robust and are therefore particularly suitable for use in severe operating conditions such as those found inside or in the vicinity of the cooling fluid.

According to an aspect of the invention, each fuel element has an active portion, a head and a stem connecting the head to the active portion, wherein the supports and the local axial adjustment devices are integrated in the heads of the fuel elements and wherein the heads of the fuel elements are provided with locking seats, arranged so that, in the respective locking positions, the locking members engage corresponding locking seats of respective adjacent fuel elements.

In this way, the fuel elements are constrained directly to one another or are constrained to the vessel, directly or through an anchoring structure, and it is not necessary to use auxiliary components.

According to an aspect of the invention, in each fuel element, the head has a cylindrical or prismatic side wall extending along the respective longitudinal axis, wherein the side wall has first slots, defining respective locking seats, and second slots, and wherein the locking members engage the corresponding locking seats through respective second slots in the respective locking positions.

In practice, the seats may either pass through the side walls of the heads of the fuel elements or be defined by portions at the upper end of the heads themselves. In either case, the mutual locking of the adjacent fuel elements is achieved in a simple and effective manner.

According to an aspect of the invention, the nuclear reactor comprises a grid anchored to the vessel and arranged transversely to the longitudinal axes of the fuel elements, so as to axially restrain the fuel elements;
wherein the grid comprises a plurality of individually removable modular grid components, arranged, in a working position, so as to axially restrain respective fuel elements and provided with respective locking members; and
wherein, in a working position, adjacent modular grid components are reversibly locked to one another by the respective locking members so as to prevent relative mutual sliding in a direction parallel to the longitudinal axes of the respective fuel elements and wherein the modular grid components are shaped so that, when one of the modular grid components is removed from the grid, the grid allows the extraction of the corresponding fuel element through a passage left open by the removed modular grid component.

The grid is of a modular design and is constructed so that a single modular grid component may be individually removed to allow the extraction of the corresponding fuel element while keeping the others constrained in the correct working position. The reversible coupling between adjacent modular grid components may be released so as to free a single modular grid component at a time, leaving the others axially constrained as in the normal working configuration, in which the grid is complete. The operation of extracting the fuel elements may therefore be performed safely and at low cost.

The modular design also allows a single modular grid component to be replaced in case of damage. The moving parts used to implement the reversible axial constraint between adjacent modular grid components may be subject to severe operating conditions in the circulating cooling fluid, especially when a heavy liquid metal is used, in an environment subject to radiation fields, such as to require periodic monitoring and possible subsequent replacement. The modular grid allows only the damaged modular grid component to be replaced, with neither intervening on the corresponding fuel element, nor on the other fuel elements, which remain in the usual and correct operating configuration, nor on the other modular grid components. The repair of the grid is therefore advantageous both in terms of simplicity of execution and in terms of costs.

According to an aspect of the invention, the supports of the axial adjustment devices are integrated in the modular grid components.

The integration of the axial adjustment devices is consistent with the modular design and serves to facilitate maintenance by avoiding the need to intervene directly on the fuel elements.

According to an aspect of the invention, for each modular grid component and for each fuel element, the axial adjustment devices comprise central axial adjustment devices and wherein each central axial adjustment device includes:
an adjustment seat on one of the modular grid component and the respective fuel element;
an axial constraint member, on the other of the modular grid component and the respective fuel element;
a central actuator, comprising a tubular body aligned with the longitudinal axis of the respective fuel element, threadedly coupled to the adjustment seat and rotatably and axially fixedly coupled to the axial constraint member.

According to an aspect of the invention, each modular grid component comprises a respective support for the locking members and the respective adjustment seat is defined by a hollow cylindrical member rigidly connected to the support and internally threaded.

According to an aspect of the invention, the axial constraint members are defined by rings fixed coaxially within the heads of respective fuel elements and wherein ends of the central actuators are coupled to the rings of the respective axial constraint members.

The central axial adjustment device offers a further opportunity for adjustment. On the one hand, the adjustment can be performed in a simple manner using a single actuator when the operating conditions do not require balancing particularly significant stresses on the adjustment members. On the other hand, the central axial adjustment device and the local axial adjustment devices can be used in combination, extending the adjustment range.

The solution is also robust and allows for a simple, precise and effective adjustment.

According to an aspect of the invention, each modular grid component is provided with locking seats and the respective reversible locking members have respective locking positions, in which the locking members engage corresponding locking seats of respective adjacent modular grid components, and respective retracted positions, in which the locking members are retracted from the respective locking seats.

According to an aspect of the invention, each modular grid component comprises a body having a cylindrical or prismatic side wall coaxial with the corresponding fuel element, wherein the side wall has first slots, defining respective locking seats, and second slots, and wherein the locking members engage the corresponding locking seats through respective second slots in the respective locking positions.

### Brief description of the drawings

For a better understanding of the present invention, some preferred embodiments are presented, by way of non-limiting example, with reference to the accompanying drawings, in which:
- figure 1 is a schematic view of a nuclear reactor;
- figure 2 is a simplified and enlarged top plan view of components of the nuclear reactor of figure 1;
- figure 3 is an enlarged perspective view of one of the components of figure 2, according to an embodiment of the present invention, with parts cut away for clarity;
- figure 4 is a top plan view of the component of figure 3, with parts cut away for clarity;
- figure 5 is a side view, sectioned along the plane V-V of figure 2, of the component of figure 3;
- figure 6 is a side view, sectioned along an axial vertical plane, of a component of a nuclear reactor according to a different embodiment of the present invention;
- figure 7 is a side view, sectioned along an axial vertical plane, of a component of a nuclear reactor according to another embodiment of the present invention;
- figure 8 is a side view, sectioned along an axial vertical plane, of a component of a nuclear reactor according to a further embodiment of the present invention;
- figure 9 is a schematic view of another nuclear reactor;
- figure 10 is a simplified and enlarged top plan view of components of the nuclear reactor of figure 9;
- figure 11 is a side view, sectioned along an axial vertical plane, of a component of the nuclear reactor of figure 9 according to another embodiment of the present invention;
- figure 12 is a side view, sectioned along an axial vertical plane, of a component of the nuclear reactor of figure 9 according to a further embodiment of the present invention.

### Description of embodiments

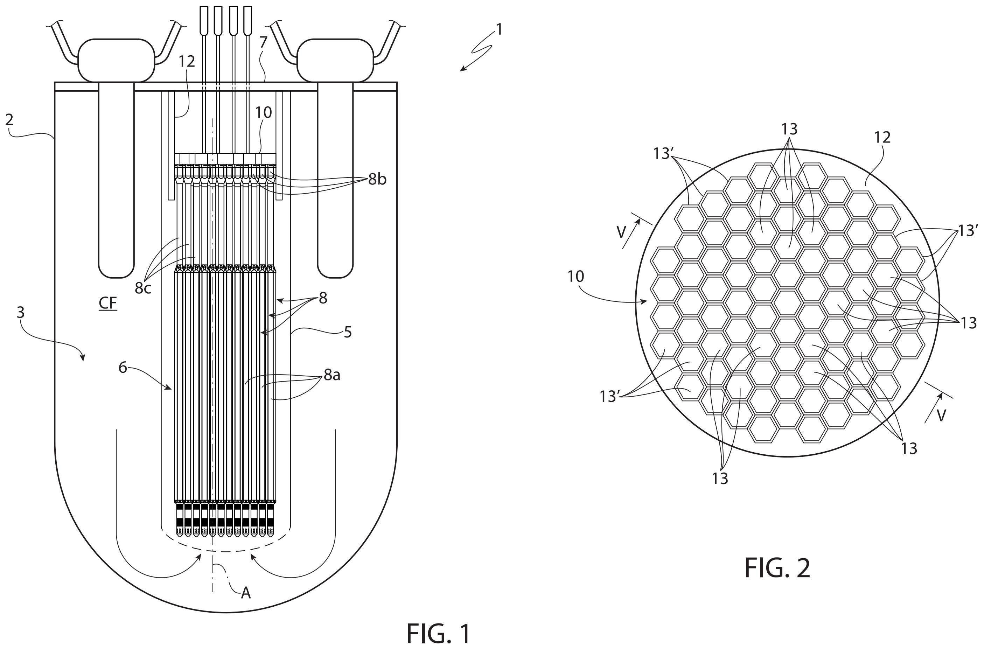

With reference to figure 1, a nuclear reactor according to an embodiment of the present invention is indicated by number 1 and comprises a vessel 2 internally defining a pool 3, an internal separation structure 5 open at the bottom and a core 6 contained within the internal separation structure 5. The vessel 2 is further provided with a closure element 7 at the top. A cooling fluid CF, for example a heavy liquid metal, for example and without limitation liquid lead, bismuth or a lead-bismuth eutectic alloy, is contained in the pool 3 and circulates in the internal separation structure 5 through the core 6 on account of circulation pumps not shown or by natural circulation. It is understood, however, that the invention can also be used in reactors cooled with different fluids, for example molten salts or water.

The core 6 is housed in the vessel 2, more specifically within the internal separation structure 5, and comprises a plurality of fuel elements 8 at least partially immersed in the cooling fluid CF. Each fuel element 8 extends along a respective longitudinal axis A arranged in use substantially vertically and has an active portion 8a, corresponding to the zone where the fuel resides, a head 8b, in the upper position, a stem 8c, defined by a structural extension of the element itself of the same or a different shape and connecting the head 8b to the active portion 8a and a foot 8d defined by a sufficiently rigid part in the lower portion of the element. In the illustrated embodiment, the fuel elements 8 have a hexagonal cross-section perpendicularly to the respective longitudinal axes A, but they could have a different shape according to design preferences, for example square or circular.

The nuclear reactor 1 further comprises a grid 10 anchored to the vessel 2 and arranged transversely to the longitudinal axes A of the fuel elements 8. In a non-limiting embodiment, the grid 10 has a honeycomb shape, as shown in the plan view of figure 2. The grid 10 may for example be fixed to an anchoring structure 12 of the closure element 7, which in turn is rigidly connected to the vessel 2. Alternatively, the grid 10 can be fixed directly to the internal separation structure 5. The grid 10 counteracts the buoyancy and drag force provided by the cooling fluid CF, which is particularly intense in the case of liquid metals, and axially restrains the fuel elements 8, also limiting the vibrations induced by the cooling fluid CF in the radial direction.

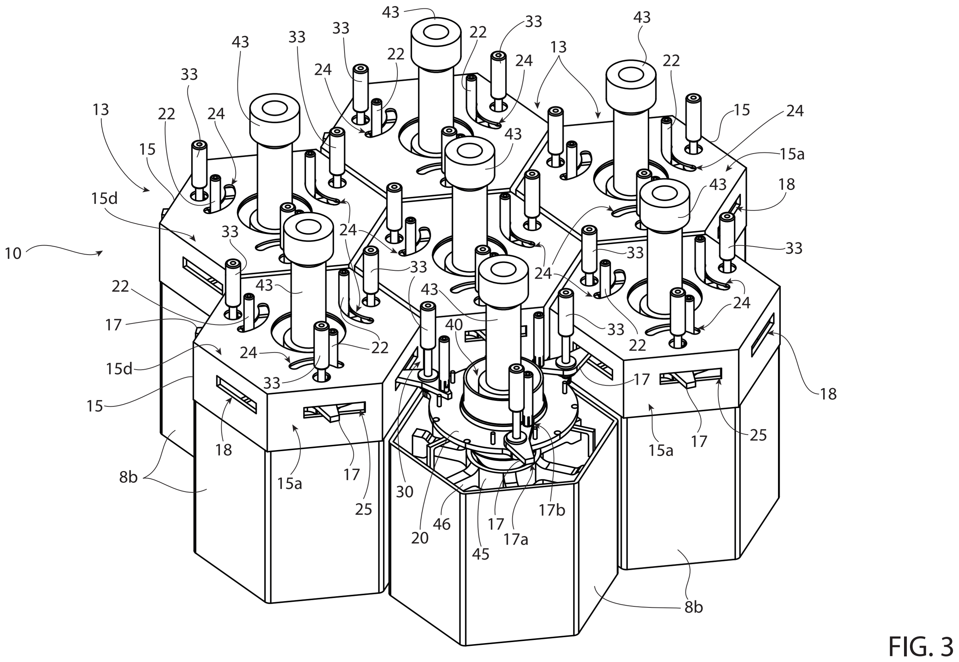

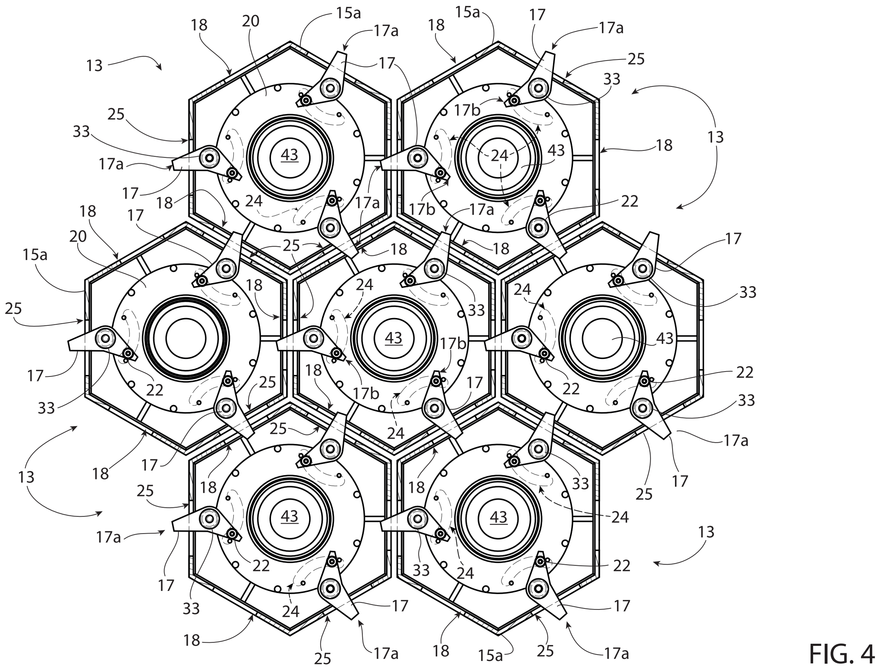

With reference to figures 3-7, the grid 10 comprises a plurality of modular grid components 13 which, in a working position, are arranged coaxially with respective fuel elements 8. The modular grid components 13 are individually removable and, in a working position, adjacent modular grid components 13 are reversibly locked to one another so as to prevent relative mutual sliding in a vertical direction. Outer modular grid components 13' are fixed to the anchoring structure 12 and, through the latter, to the vessel 2.

Furthermore, the modular grid components 13 are axially aligned with the heads 8b of the respective fuel elements 8 and are shaped so as to axially restrain the respective fuel element 8 against upward axial forces (buoyancy and drag force due to the cooling fluid CF) and so that, when one of the modular grid components 13 is removed from the grid 10, the grid 10 allows the extraction of the corresponding fuel element 8 through a passage left open by the removed modular grid component.

More specifically, each modular grid component 13 comprises a body 15 having a side wall 15a conforming to the cross-section of the fuel elements 8 (in this case a prism with a hexagonal base), so that the heads 8b of the fuel elements 8 remain in abutment against the body 15 of the respective modular grid component 13 due to the buoyancy force provided by the cooling fluid CF.

Each modular grid component 13 is also provided with reversible locking members, which in the non-limiting embodiment described herein are defined by rotating tabs 17, and locking seats 18. Alternatively, the reversible locking members could comprise sliding tabs or pins, other types of cams or eccentrics and, in general, any device suitable for preventing relative sliding between two bodies along an axis.

The tabs 17 are rotatably supported by a plate 20 around respective axes of rotation R parallel to the longitudinal axes A of the fuel elements and therefore substantially vertical. The plate 20 is fixed to the body 15, for example to the side wall 15a and/or to a base (not shown) of the respective body 15. The plate 20 is also bored and is fitted on a shaft 15c of the body 15 coaxially with the respective fuel element 8. In the non-limiting embodiment described herein, the shaft 15c allows the circulation of the cooling fluid through the respective modular grid component 13. In other embodiments, however, the shaft may be solid and the circulation of the cooling fluid may be provided by other fluid passages through the body 15.

In the embodiment of figures 3-7, each tab 17 has a locking end 17a and an actuation end 17b angled relative to one another and is provided at the actuation end 17b with an actuation member. Here, in particular, the actuation member is defined by an actuation rod 22 perpendicular to the respective axis of rotation R. Furthermore, the body 15 comprises a cover 15d having a respective circular guide opening 24 for each tab 17. The actuation rods 22 of the tabs 17 pass through respective guide openings 24 and project upwards from the cover 15d to be operated by an external actuator, for example incorporated in a service machine not shown here. As a result of the rotation of the tabs 17 around their respective axes of rotation, the locking ends 17a can exit through the side wall 15a of the body 15, which for this purpose is provided with slots 25 extending along a plane perpendicular to the axes of rotation of the tabs 17.

The locking seats 18 are defined by slots in the side wall 15a of the body 15 in positions corresponding to tabs 17 of the adjacent modular grid components 13. The slots defining the locking seats 18 face respective slots 25 and are coplanar therewith. In the embodiment of figures 3-7, in particular, in each modular grid component 13 the locking seats 18 and the slots 25 are on alternate faces of the side wall 15a, so that each locking seat 18 of a modular grid component 13 is faced by a corresponding slot 25 of one of the adjacent modular grid components 13. All the modular grid components 13 comprise an equal number of tabs 17 and locking seats 18 and in each modular grid component 13 the respective tabs 17 are alternated with the respective locking seats 18 along the side wall 15a of the body 15.

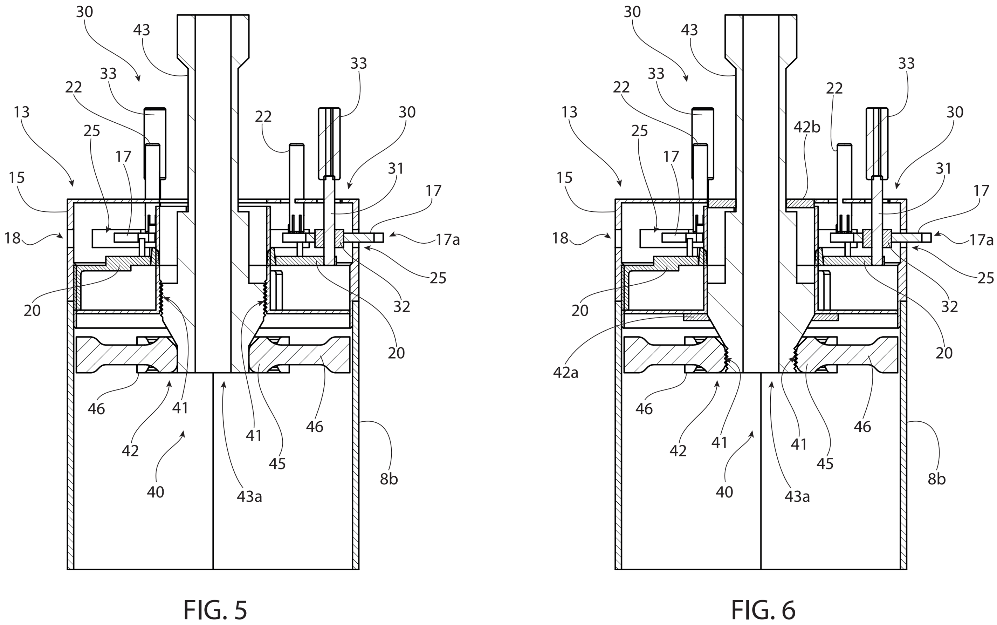

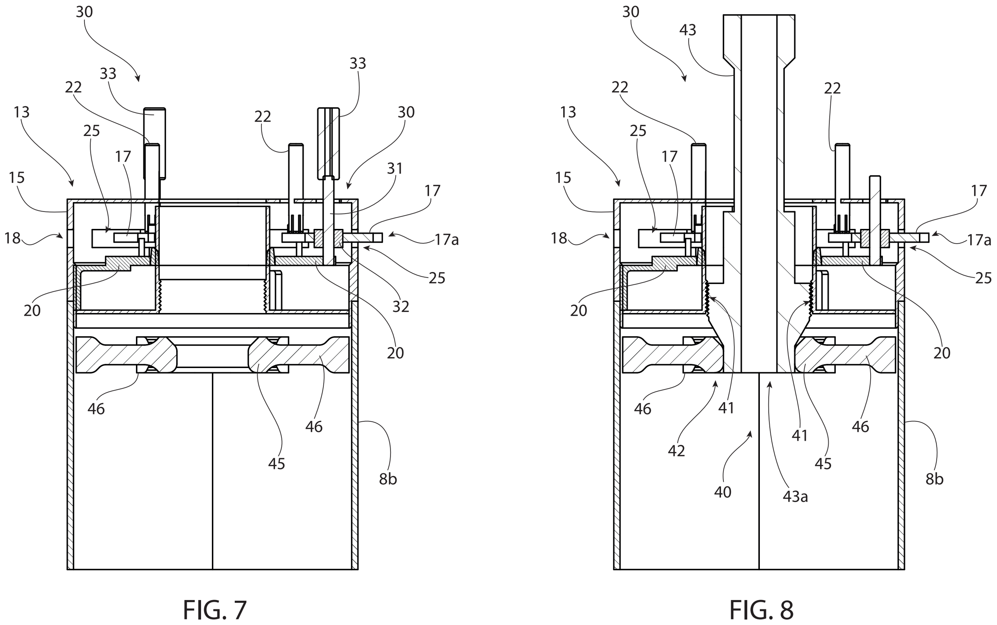

The tabs 17 are rotatable between respective locking positions and respective retracted positions. In the locking positions (figure 6), the tabs 17 engage corresponding locking seats 18 of respective adjacent modular grid components 13 with the locking ends 17a, which extend through respective slots 25. In this configuration, the modular grid components 13 are axially constrained to one another by the mutual engagement of the tabs 17 and locking seats 18, and relative axial sliding is prevented. In the retracted positions (central modular grid component 13 in figure 7), the tabs 17 are retracted from the respective locking seats 18 and are arranged entirely inside the body 15, or in any case so as not to interfere with the relative axial sliding with respect to the adjacent modular grid components 13.

In the embodiment of figures 3-7, the actuation rods 22 of the tabs 17 are operable independently of one another to move the tabs 17 themselves between the respective locking positions and the respective retracted positions.

The nuclear reactor 1 further comprises axial adjustment devices which allow to take up the axial plays in the mutual constraints between adjacent modular grid components and therefore to correctly equalize the axial positions (or elevations) of the fuel elements. In particular, the axial adjustment devices allow to adjust the axial distance between the fuel elements 8 and the respective reversible locking members, i.e. the tabs 17.

In the embodiment of figures 3-7, the axial adjustment devices comprise local axial adjustment devices 30 and a central axial adjustment device 40 for each fuel element 8 and each modular grid component 13.

The local axial adjustment devices 30 are configured to adjust the axial distance between the tabs 17 and the respective plates 20, which in this case are integrated in the body 15 of the modular grid components 13. In detail, the local axial adjustment devices 30 each comprise a threaded pin 31, a threaded bush 32 coupled to the respective threaded pin 31 and a local actuator 33. The threaded pins 31 are fixed to the plate 20 and define the axes of rotation R of the respective tabs 17, which are idly fitted on the threaded bushes 32. The local actuators 33 allow the threaded bushes 32 to be rotated relative to the respective threaded pins 31 to independently adjust the axial distance of the tabs 17 from the plates 20 and from the bodies 15 of the modular grid components and, consequently, from the corresponding fuel elements 8. In this way, it is possible to adjust the relative axial position of fuel elements 8 that are axially restrained against the respective modular grid components 13; the axial position of the fuel elements is also adjusted accordingly.

Each central axial adjustment device 40 comprises an adjustment seat 41, an axial constraint member 42 and a central actuator 43. One of the adjustment seat 41 and the axial constraint member 42 is on the modular grid component 13, while the other is on the corresponding fuel element 8.

In the embodiment of figures 3-5, in particular, the adjustment seat 41 is integrated in the body 15 of the respective modular grid component 13 and is defined in a hollow cylindrical member 44 rigidly connected to the support and internally threaded, while the axial constraint member 42 is defined by a ring 45 coaxial with the fuel element 8 and rigidly connected to the side walls of the head 8b by arms 46. The central actuator 43 comprises a threaded tubular body, aligned with the longitudinal axis A of the respective fuel element and threadedly coupled to the adjustment seat. The central actuator 43 also has an end 43a rotatably and axially fixedly coupled to the axial constraint member 42 and an end 43b which projects axially upwards from the modular grid component 13, in the opposite direction to the respective fuel element 8. When the central actuator 43 is rotated in a first direction, in particular, the end 43a, by pressing against the axial constraint member 42, tends to move the respective fuel element 8 away. Since the modular grid components 13 are axially locked to one another and to the vessel 2, the fuel element 8 is pushed downwards. When the central actuator 43 is rotated in a second direction opposite to the first direction, the end 43 retracts. If the buoyancy and/or drag force provided by the cooling fluid CF is high enough ("enough"), the corresponding fuel element 8 moves in the axial direction upwards. In this case, it is sufficient that the constraint offered by the axial constraint member 42 to the end 43a of the central actuator 43 is unilateral and the fuel element 8 spontaneously tends to rise. Otherwise, the coupling between the end 43a of the central actuator 43 and the axial constraint member 42 can be designed so that the constraint is bilateral. In this case, to adjust the axial position of the fuel element, the end 43a of the central actuator 43 lifts the corresponding fuel element 8.

According to the embodiment illustrated in figure 6, the threaded adjustment seat 41 is made inside the ring 45, while a first axial constraint member 42a and a second axial constraint member 42b are defined for example by flanges or collars rigidly fixed to the tubular body of the central actuator 43 and acting in abutment against respective ends of the hollow cylindrical member 44, which in this case is not internally threaded.

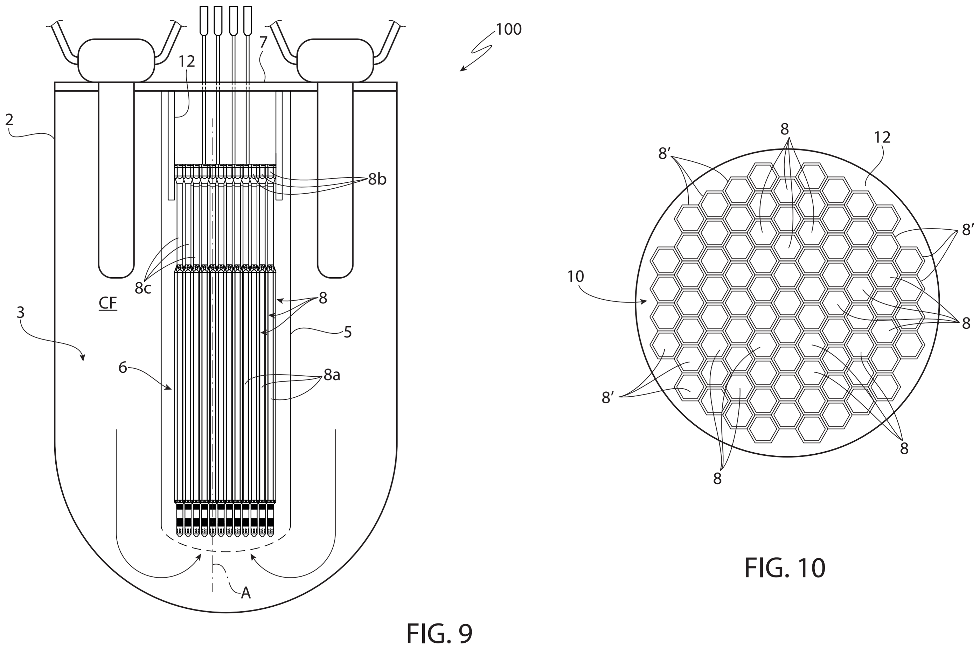

It is not essential that both the local axial adjustment devices 30 and the central axial adjustment device 40 are present. In alternative embodiments, only the local axial adjustment devices 30 (figure 7) or only the central axial adjustment device 40 (figure 9) may be present.

According to a further embodiment, shown in figures 9-11, in a nuclear reactor 100 the locking members and respective axial adjustment devices are integrated in the heads 8b of the fuel elements 8. The nuclear reactor 100 has the same general structure as the nuclear reactor 1 of figure 1, except for the lack of the modular grid and the fact that the fuel elements 8 of the core 6 are anchored directly to one another and, through the outer fuel elements 8', to the anchoring structure 12. Plates 120 are fixed inside the heads 8b of the fuel elements 8 and support the locking members, here rotating tabs 117 between respective locking positions and respective retracted positions.

The heads 8b of the fuel elements 8 have a prismatic, for example hexagonal, or cylindrical cross-section. In each fuel element 8, the side wall of the head 8b has locking seats 118, defined by slots in positions corresponding to tabs 117 of the heads 8b of the adjacent fuel elements 8, and slots 125, facing and coplanar with respective locking seats 118 of the heads 8b of the adjacent fuel elements 8. In the locking position, the tabs 117 engage respective locking seats 118 of adjacent fuel elements 8 through respective slots 25.

Local axial adjustment devices 130 are configured to adjust the axial distance between the tabs 117 and the respective plates 120. The local axial adjustment devices 130 each comprise a threaded pin 131, a threaded bush 132 coupled to the respective threaded pin 131 and a local actuator 133 and operate substantially as described for the local axial adjustment devices 30 of figures 3-5, except that, in this case, the adjustment is performed directly on the head 8b of the fuel element 8.

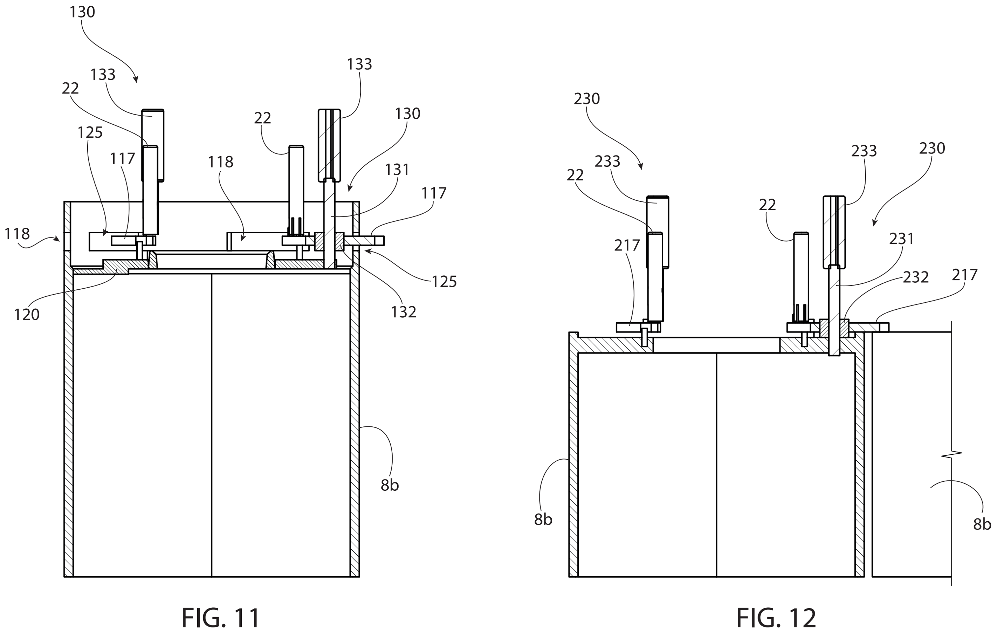

According to a further embodiment of the invention, illustrated in figure 11, the locking members and respective axial adjustment devices are again integrated in the heads 8b of the fuel elements 8. As before, the locking members comprise tabs, here indicated by 217, rotatable between respective locking positions and respective retracted positions. In this case, however, a support 220 for the locking members is arranged so that the tabs 217 are located above the head 8b of the fuel element 8. The tabs 217 therefore define unilateral constraints for the heads 8b of the fuel elements 8 and the locking occurs on the upper edges of the adjacent fuel elements 8 (in practice the upper edges of the fuel elements 8 define the locking seats).

Local axial adjustment devices 230 are configured to adjust the axial distance between the tabs 217 and the respective supports 220, that is, the overhang of the tabs 217 above the upper end of the respective fuel element 8. The local axial adjustment devices 230 each comprise a threaded pin 231, a threaded bush 232 coupled to the respective threaded pin 231 and a local actuator 233 and operate substantially as described for the local axial adjustment devices 30 of figures 3-5, except that, in this case, the adjustment is performed directly on the head 8b of the fuel element 8.

It is finally clear that to the nuclear reactor described and illustrated herein, modifications and variations can be made without thereby departing from the scope of protection of the present invention, as defined in the appended claims.

## Claims

1. A nuclear reactor comprising:
a vessel (2) internally defining a pool (3);
a cooling fluid (CF) in the pool (3);
a core (6) housed in the vessel (2) and comprising a plurality of fuel elements (8) at least partially immersed in the cooling fluid (CF), wherein each fuel element (8) extends along a respective longitudinal axis (A); and
for each fuel element (8), respective reversible locking members (17; 117; 217), configured to axially constrain adjacent fuel elements (8) to one another and to axially constrain the outermost fuel elements (13'; 8') directly or indirectly to the vessel (2), so as to prevent the extraction of the constrained fuel elements (8);
**characterized by** axial adjustment devices (30, 40; 130; 230) configured to adjust a respective axial distance between each fuel element (8) and the respective locking members (17; 117; 217).

2. The nuclear reactor according to claim 1, wherein the locking members (17; 117; 217) are movable between respective locking positions, in which the locking members (17; 117; 217) axially constrain respective adjacent fuel elements (8), and respective retracted positions, in which the locking members (17; 117; 217) are retracted within an axial footprint of the respective fuel elements (8).

3. The nuclear reactor according to claim 1 or 2, comprising supports (20; 120; 220) for the locking members (17; 117; 217).

4. The nuclear reactor according to claim 3, wherein the axial adjustment devices (30, 40; 130; 230) comprise local axial adjustment devices (30; 130; 230), configured to adjust axial distances of the respective locking members (17; 117; 217) from the respective supports (20; 120; 220) independently of one another.

5. The nuclear reactor according to claim 4, wherein the local axial adjustment devices (30; 130; 230) comprise, for each locking member (17; 117; 217), a threaded pin (31; 131; 231) on the respective support (20; 120; 220), a threaded bush (32; 132; 232) coupled to the threaded pin (31; 131; 231) and a local actuator (33; 133; 233) configured to rotate the threaded bush (32; 132; 232) with respect to the threaded pin (31; 131; 231); and wherein the locking members (17; 117; 217) are idly fitted on the respective threaded bushes (32; 132; 232).

6. The nuclear reactor according to claim 4 or 5, wherein each fuel element (8) has an active portion (8a), a head (8b) and a stem (8c) connecting the head (8b) to the active portion (8a), wherein the supports (120; 220) and the local axial adjustment devices (130; 230) are integrated in the heads (8b) of the fuel elements (8) and wherein the heads (8b) of the fuel elements (8) are provided with locking seats (118), arranged so that, in the respective locking positions, the locking members (117; 217) engage corresponding locking seats (118) of respective adjacent fuel elements (8).

7. The nuclear reactor according to claim 6, wherein, in each fuel element (8), the head (8b) has a prismatic or cylindrical side wall extending along the respective longitudinal axis (A), wherein the side wall has first slots, defining respective locking seats (118), and second slots (125), and wherein the locking members (117) engage the corresponding locking seats (118) through respective second slots (125) in the respective locking positions.

8. The nuclear reactor according to any one of claims 3 to 5, comprising a grid (10) anchored directly or indirectly to the vessel (2) and arranged transversely to the longitudinal axes (A) of the fuel elements (8), so as to axially restrain the fuel elements (8);
wherein the grid (10) comprises a plurality of individually removable modular grid components (13), arranged, in a working position, so as to axially restrain respective fuel elements (8) and provided with respective locking members (17; 117; 217); and
wherein, in a working position, adjacent modular grid components (13) are reversibly locked to one another by the respective locking members (17; 117; 217) so as to prevent relative mutual sliding in a direction parallel to the longitudinal axes (A) of the fuel elements (8) and wherein the modular grid components (13) are shaped so that, when one of the modular grid components (13) is removed from the grid (10), the grid (10) allows the extraction of the corresponding fuel element (8) through a passage left open by the removed modular grid component (13).

9. The nuclear reactor according to claim 8, wherein the supports (20) of the axial adjustment devices (30, 40) are integrated in the modular grid components (13).

10. The nuclear reactor according to claim 8 or 9, wherein, for each modular grid component (13) and for each fuel element (8), the axial adjustment devices (30, 40) comprise central axial adjustment devices (40) and wherein each central axial adjustment device (40) includes:
an adjustment seat (41) on one of the modular grid component (13) and the respective fuel element (8);
an axial constraint member (42), on the other of the modular grid component (13) and the respective fuel element (8) ;
a central actuator (43), comprising a tubular body aligned with the longitudinal axis (A) of the respective fuel element (8), threadedly coupled to the adjustment seat (41) and rotatably and axially fixedly coupled to the axial constraint member (42).

11. The nuclear reactor according to claim 10, wherein each modular grid component (13) comprises a respective support (20) for the locking members (17) and the respective adjustment seat (41) is defined by a hollow cylindrical member rigidly connected to the support (20) and internally threaded.

12. The nuclear reactor according to any one of claims 8 to 11, wherein the axial constraint members (42) are defined by rings (45) fixed coaxially within the heads (8b) of respective fuel elements (8) and wherein ends (43a) of the central actuators (43) are coupled to the rings (45) of the respective axial constraint members (41).

13. The nuclear reactor according to any one of claims 8 to 12, wherein each modular grid component (13) is provided with locking seats (18) and the respective locking members (17) have respective locking positions, in which the locking members (17) engage corresponding locking seats (18) of respective adjacent modular grid components (13), and respective retracted positions, in which the locking members (17) are retracted from the respective locking seats.

14. The nuclear reactor according to claim 13, wherein each modular grid component (13) comprises a body (15) having a cylindrical or prismatic side wall (15a) coaxial with the corresponding fuel element (8), wherein the side wall (15a) has first slots, defining respective locking seats (18), and second slots (25), and wherein the locking members (17) engage the corresponding locking seats through respective second slots (25) in the respective locking positions.

15. The nuclear reactor according to any one of the preceding claims, comprising an anchoring structure (12) fixed to the vessel (2), wherein the outermost fuel elements (13'; 8') are axially constrained to the vessel (2) indirectly through the anchoring structure (12).
